# EUROPEAN PATENT APPLICATION

(11) **EP 1 727 264 A1**
(43) Date of publication of application: **29.11.2006**
(21) Application number: 05709487.2
(22) Date of filing: 31.01.2005
(51) Int. Cl.: H02M 3/155

(54) **POWER SUPPLY APPARATUS**

(30) Priority: 15.03.2004 JP 2004072280
(71) Applicant: ROHM CO., LTD., Kyoto-shi, Kyoto 615-8585 (JP)
(72) Inventor: OKI, Hirokazu, ROHM CO., LTD., Kyoto-Shi, Kyoto 615-8585 (JP); IDE, Yuzo, ROHM CO., LTD., Kyoto-Shi, Kyoto 615-8585 (JP)
(74) Representative: Glawe, Delfs, Moll
(86) International application number: PCT/JP2005/001324
(87) International publication number: WO 2005/088816

(57) **Abstract**

A switching regulator type power supply apparatus that converts an input voltage and then feeds the voltage thus converted to a smoothing circuit, and that operates in such a way that an output from the smoothing circuit becomes equal to a predetermined output voltage includes a control circuit for generating a control signal by a PWM scheme so that the output becomes equal to the predetermined output voltage, and a switching element that is switched by the control signal so as to convert the input voltage and feed the voltage thus converted to the smoothing circuit. Here, based on an external signal for turning on/off an output of the output voltage, a supply path for supplying an operating power to elements constituting the control circuit is switched between a conducting state and a non-conducting state.

## Description

### Technical Field

The present invention relates to a power supply apparatus, more particularly to a switching regulator type power supply apparatus.

### Background Art

A conventional switching regulator type power supply apparatus built with, for example, an integrated circuit device is disclosed in Patent Publication 1. The DC-DC converter disclosed in Patent Publication 1 is built with a control circuit that is formed on a one-chip integrated circuit and serves as a conventional power supply apparatus and a large number of external elements. This control circuit is activated by receiving a control signal CTL from outside, and switches an output transistor connected to a direct-current power supply. An output current from the output transistor is fed to a smoothing circuit, and a voltage from the smoothing circuit is then fed from the output terminal as an output voltage.

This control circuit includes an error amplifier that compares a divided voltage obtained by dividing the output voltage with a reference voltage, a PWM comparator that compares an output of the error amplifier with a triangular wave from an oscillator, and an output circuit that drives the output transistor in accordance with an output signal from the PWM comparator, and operates in such a way as to keep the output voltage at a predetermined voltage while the control circuit is activated.
Patent Publication 1: JP-A-H10-323026

### Disclosure of the Invention

### Problems to be Solved by the Invention

According to the conventional power supply apparatus described above, when it is not receiving a control signal CTL from outside and thus is not activated, it is possible to halt driving of the output transistor and thereby bring it into a so-called standby state so as not to allow the DC-DC converter to generate an output voltage. However, since the operation of the control circuit is not stopped completely at that time, the control circuit consumes electric power, resulting in unsatisfactory power saving in a standby state.

On the other hand, when this conventional power supply apparatus is incorporated in electronic appliances such as radios or monitors, the following problem arises. Depending on which switching frequency is selected, switching noise at that switching frequency may affect the output of these electronic appliances such as radios or monitors. To avoid the influence of switching noise, there has been proposed a method for changing a switching frequency under conditions of continuous operation. According to the conventional power supply apparatus, however, the switching frequency of the output transistor is a frequency defined by the fixed oscillating frequency of the internal oscillator; hence it is impossible to change the switching frequency. It is for this reason that, to prevent the influence of switching noise, the output transistor or the like that is a source of switching noise needs to be shielded. This undesirably results in poor usability.

In general, it is preferable to set a switching frequency at a higher frequency for smaller and lighter switching regulator type power supply apparatuses. In that case, however, if an error amplifier having a good frequency characteristic is used to deal with a high switching frequency, the circuitry suffers from oscillation. This makes it practically impossible to excessively enhance the frequency characteristic of an error amplifier and thus to set a switching frequency at a higher frequency. This makes it impossible to achieve smaller and lighter apparatuses.

In view of the conventionally experienced problems described above, an object of the present invention is to provide a switching regulator type power supply apparatus that eliminates the electric power consumption in a standby state, and that can vary a switching frequency, and that operates stably even when a switching frequency is set at a higher frequency.

### Means for Solving the Problem

To achieve the above object, according to the present invention, a switching regulator type power supply apparatus that operates in such a way that an input voltage is converted and then fed to a smoothing circuit, and an output from the smoothing circuit becomes equal to a predetermined output voltage is provided with a control circuit for generating a control signal by a PWM scheme so that the output becomes equal to the predetermined output voltage, and a switching element that is switched by the control signal so as to convert the input voltage and feed the voltage thus converted to the smoothing circuit. Here, based on an external signal for turning on/off an output of the output voltage, a supply path for supplying an operating power to elements constituting the control circuit is switched between a conducting state and a non-conducting state.

With this configuration, when an external signal to stop an output is fed, the output voltage is stopped, and the switching circuit interrupts the supply path for supplying an operating electric power supply to the control circuit, whereby the control circuit is completely stopped.

The control circuit of the present invention includes an error amplifier for generating an error signal by comparing a feedback voltage commensurate with the output voltage with a reference voltage, an oscillation circuit for generating an oscillating signal at a predetermined frequency, a PWM comparator for generating a PWM signal by comparing the oscillating signal with the error signal, a drive circuit for driving the switching element by feeding the control signal thereto based on the PWM signal, and a switching circuit for switching the supply path that supplies an operating power to the elements constituting the control circuit between a conducting state and a non-conducting state. Here, the power supply apparatus is further provided with an input terminal to which the input voltage is fed, a switching terminal for outputting a voltage to be fed to the smoothing circuit, the switching terminal being connected to one end of the switching element, a feedback voltage terminal to which the feedback voltage is fed, an external element connection terminal to which an external element that determines the predetermined frequency of the oscillating signal is connected, a feedback terminal to which an output of the error amplifier is connected, and to which, for preventing self-erroneous oscillation of the control circuit, one end of a phase lag compensation circuit that is connected at another end thereof to the feedback voltage terminal is connected, and a standby terminal to which the external signal is fed.

With this configuration, when an external signal to stop an output is fed to the standby terminal, the switching circuit interrupts the supply path for supplying an operating electric power supply to the control circuit, whereby the control circuit is completely stopped. Furthermore, with the external element connected to the external element connection terminal, it is possible to determine the oscillating frequency of the oscillation circuit. In addition to this, it is possible to connect the phase lag compensation circuit between the feedback voltage terminal and the feedback terminal.

The oscillation circuit of the present invention includes a capacitor for performing charge/discharge, a first current mirror circuit for determining the value of a charging current of the capacitor based on the resistance value of the external element, a second current mirror circuit for determining the value of a discharging current of the capacitor, and a charge/discharge switching circuit for switching charge/discharge of the capacitor by turning on/off the second current mirror circuit by comparing a voltage across the capacitor with first and second threshold value voltages.

With this configuration, the output voltage of the capacitor outputted as an output signal of the oscillation circuit becomes a triangular wave whose amplitude is equal to the difference between the first and second threshold values, and the values of the charging/discharging currents for the capacitor are determined based on the resistance value of the resistor element connected to the external element connection terminal.

The control circuit of the present invention includes an overcurrent protection circuit for detecting a current flowing through the switching element, and stopping the drive circuit when the current exceeds a predetermined current value.

The control circuit of the present invention includes an overheat protection circuit for stopping the drive circuit when the temperature of a certain spot of the power supply apparatus exceeds a predetermined temperature.

The control circuit of the present invention includes a soft-start circuit for controlling the error amplifier so that the output voltage gradually increases at startup.

### Effect of the Invention

According to the present invention, an external signal to stop an output is fed, the switching circuit interrupts the supply path for supplying an operating electric power supply to the control circuit, whereby the control circuit is completely stopped. This makes it possible to reduce the electric power consumption in a standby state to zero.

Also, by changing the external element connected to the external element connection terminal, it is possible to change the oscillating frequency of the oscillation circuit, that is, the switching frequency of the switching element. This makes it possible to prevent noise that occurs at a specific frequency.

Even when a switching frequency is set at a higher frequency, by connecting the phase lag compensation circuit between the feedback voltage terminal and the feedback terminal, it is possible to prevent oscillation of the circuitry, and thus ensure stable operation thereof.

Moreover, since there is provided the overcurrent protection circuit for detecting a current flowing through the switching element and stopping the drive circuit when the current exceeds a predetermined current value, it is possible to prevent, for example, damage resulting from overcurrent.

When the output voltage from the switching element becomes lower than a predetermined voltage, the overcurrent detection comparator of the overcurrent protection circuit judges that the current flowing through the switching element becomes equal to or greater than a predetermined current, and then stops the drive circuit. This makes it possible to perform overcurrent protection without using an additional current detector or the like.

Furthermore, when the temperature of a certain spot of the integrated circuit device exceeds a predetermined temperature, the drive circuit is stopped. This makes it possible to prevent, for example, damage to the integrated circuit device resulting from overheating. Additionally, since the output voltage gradually increases at startup, it is possible to prevent an excessive current such as an inrush current from flowing into a load at startup. This makes it possible to prevent the switching element or the load from being damaged.

### Brief Description of Drawings

[Fig. 1] A circuit block diagram showing the electrical structure of the regulator IC (power supply apparatus) of one embodiment of the present invention.
[Fig. 2] A circuit diagram showing the specific circuitry of the oscillation circuit shown in Fig. 1.

### List of Reference Symbols

- 1: input terminal
- 2: SW terminal (switching terminal)
- 3: FB terminal (feedback terminal)
- 4: GND terminal (ground terminal)
- 5: INV terminal (feedback voltage terminal)
- 6: RT terminal (external element connection terminal)
- 7: EN terminal (standby terminal)
- 10: regulator IC (power supply apparatus)
- 11: smoothing circuit
- 12: switch
- 13,25: constant voltage sources
- 14: switch circuit (switching circuit)
- 15: internal control circuit
- 16: soft-start circuit
- 17: reference voltage source
- 18: error amplifier
- 19: PWM comparator
- 20: oscillation circuit
- 20a, 20b: current mirror circuits
- 21: latch circuit
- 22: driver (drive circuit)
- 23: TSD circuit (overheat protection circuit)
- 24: overcurrent detection comparator (overcurrent protection circuit)
- 26: MOS (switching element)
- 27: phase lag compensation circuit
- 28: reset signal generation circuit
- 28a: reference voltage source
- 28b: comparator

- C1,C2,C3, C4, C5, C20: capacitors
- D1: diode
- L1: coil
- R1, R2: voltage dividing resistors
- R3: resistor
- R4: resistor (resistor element, external element)
- R5: pull-up resistor
- SW20: charge/discharge switching circuit

### Best Mode for Carrying Out the Invention

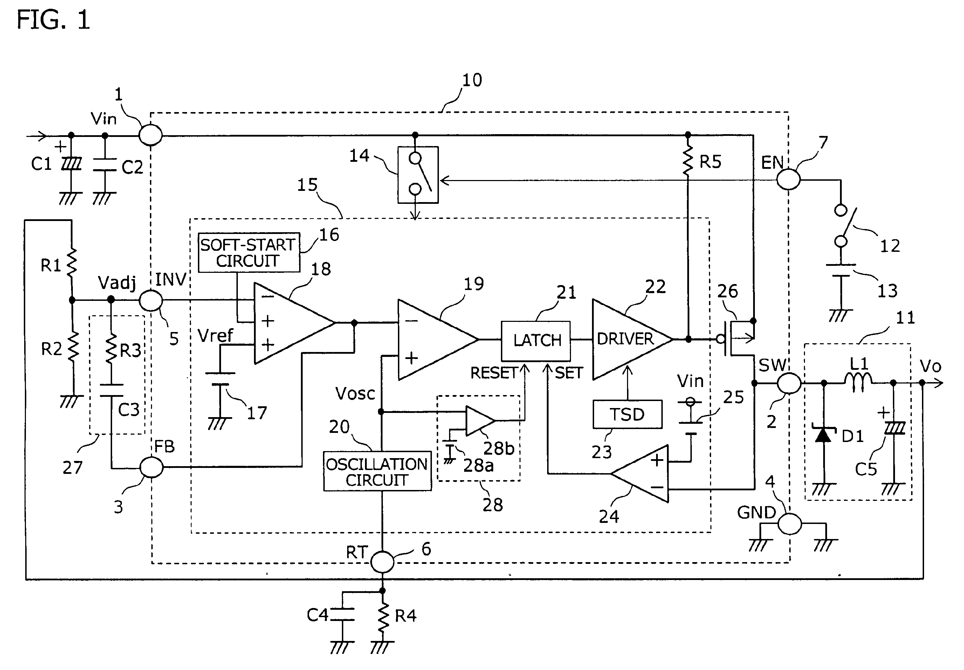

Hereinafter, an embodiment of the present invention will be described with reference to the accompanying drawings. Fig. 1 is a circuit block diagram showing the electrical structure of the regulator IC (power supply apparatus) of one embodiment of the present invention. In Fig. 1, reference numeral 10 denotes a regulator IC integrated on one chip. Fig. 1 also shows a large number of external elements connected to the regulator IC 10.

The regulator IC 10 includes seven connection terminals for external connection, a P-channel MOS (metal oxide semiconductor) transistor (hereinafter, the "MOS") 26, an internal control circuit 15 that controls the MOS 26, and a switch circuit (switching circuit) 14 that feeds an operating electric power supply to the internal control circuit 15. The internal control circuit 15 includes a soft-start circuit 16, a reference voltage source 17, an error amplifier 18, a PWM comparator 19, an oscillation circuit 20, a latch circuit 21, a driver (drive circuit) 22, a TSD (thermal shut down) circuit (overheat protection circuit) 23, an overcurrent detection comparator (overcurrent protection circuit) 24, a constant voltage source 25, and a reset signal generation circuit 28.

The input terminal 1 is fed with an input voltage Vin (for example, 5 to 35 V), and a smoothing capacitor C 1 and a noise-cut capacitor C2 are externally connected in parallel between the input terminal 1 and the ground. A switching current switched by the MOS 26 is outputted from an SW terminal (switching terminal) 2, to which a smoothing circuit 11 is externally connected. This smoothing circuit 11 includes a coil L1, a diode (for example, a Schottky barrier diode) D1, and a smoothing capacitor (for example, an electrolytic capacitor) C5. The cathode of the diode D1 and one end of the coil L1 are connected to the SW terminal 2, the other end of the coil L1 is connected to one end of the output capacitor C5, and the other end of the capacitor C5 and the anode of the diode D 1 are connected to the ground.

The other end of the coil L1 is connected to the ground via a circuit in which voltage dividing resistors R1 and R2 are connected in series, and a node at which the voltage dividing resistors R1 and R2 are connected together is connected to an INV terminal (feedback voltage terminal) 5, and, inside the regulator IC 10, the INV terminal 5 is connected to an inverting input terminal (-) of the error amplifier 18. A first non-inverting input terminal (+) of the error amplifier 18 is connected to the soft-start circuit 16, and a second non-inverting input terminal (+) thereof is connected to the reference voltage source 17.

The output terminal of the error amplifier 18 is connected to an inverting input terminal (-) of the PWM comparator 19 and to an FB terminal (feedback terminal) 3. Between the FB terminal 3 and the INV terminal 5, a phase lag compensation circuit 27 built as a circuit in which a capacitor C3 and a resistor R3 are connected in series is externally connected.

A non-inverting input terminal (+) of the PWM comparator 19 is connected to the output terminal of the oscillation circuit 20. The output terminal of the PWM comparator 19 is connected to the input terminal of the driver 22 via the latch circuit 21 serving as a waveform shaping circuit, and the output terminal of the driver 22 is connected to the gate of the MOS 26. The source of the MOS 26 is connected to the input terminal 1, the drain thereof is connected to the SW terminal 2, and the gate thereof is connected to the input terminal 1 via a pull-up resistor R5 (for example, 50 kΩ).

The output terminal of the oscillation circuit 20 is connected to the reset terminal of the latch circuit 21 via the reset signal generation circuit 28, and the set terminal of the latch circuit 21 is connected to the output terminal of the overcurrent detection comparator 24. A non-inverting input terminal (+) of the overcurrent detection comparator 24 is fed with an input voltage Vin via the constant voltage source 25, and an inverting input terminal (-) of the overcurrent detection comparator 24 is connected to the drain of the MOS 26. The driver 22 is fed with an overheat detection signal from the TSD circuit 23.

The regulator IC 10 also has an RT terminal (external element connection terminal) 6 connected to the oscillation circuit 20. Between the RT terminal 6 and the ground, a resistor R4 for determining the oscillating frequency of the oscillation circuit 20 and a noise removal capacitor C4 are externally connected in parallel. Note that a GND terminal (ground terminal) 4 is connected to the ground, whereby the reference potential of the regulator IC 10 is determined.

One end of the switch circuit 14 is connected to the input terminal 1, and, though not shown in the drawing, the other end thereof is connected to relevant elements in the internal control circuit 15 as their electric power supplies, thereby intermittently feeding an electric power supply to the internal control circuit 15 based on an external signal inputted from an EN terminal (standby terminal) 7 to stop an output. Between the EN terminal 7 and the ground, a circuit in which a switch 12 that feeds a voltage as the external signal and a constant voltage source 13 are connected in series is externally connected.

Next, how the regulator IC 10 configured as described above is switched between a standby state and an operating state will be described. A direct-current voltage from an unillustrated direct-current power supply is subjected to smoothing and noise removal by the capacitors C1 and C2, respectively, and is then fed to the input terminal 1 as an input voltage Vin.

When the external switch 12 is off (in the open position), the switch circuit 14 is off (in the open position), whereby no input voltage Vin is fed to the internal control circuit 15, and thus the internal control circuit 15 does not operate. This makes it impossible for the regulator IC 10 to perform a switching operation. That is, the regulator IC 10 is in a so-called standby state in which it does not generate a predetermined voltage as an output voltage Vo. At this time, since all of the internal circuits of the regulator IC 10 are completely stopped, the electric power consumption of the regulator IC 10 is zero. Note that, at this time, the gate of the MOS 26 is fixed at a high level by the pull-up resistor R5.

On the other hand, when the external switch 12 is on (in the closed position), the voltage from the constant voltage source 13 is fed to the switch circuit 14, whereby the switch circuit 14 is turned on (in the closed position), and thus an input voltage Vin is fed to the internal control circuit 15. This makes the internal control circuit 15 start to operate, and thus the regulator IC 10 starts to perform a switching operation. That is, the regulator IC 10 is brought into an operating state in which it generates a predetermined voltage as an output voltage Vo.

Next, how relevant parts of the regulator IC 10 operate in this operating state will be described below. An input voltage Vin is converted into a pulse voltage by the switching operation of the MOS 26, and is then fed to the smoothing circuit 11. When the MOS 26 is on, a current flows from the input terminal 1 to the coil L1 via the MOS 26. As a result, energy is stored in the coil L1 and the capacitor C5 is charged. On the other hand, when the MOS 26 is off, the energy stored in the coil L1 is circulated by the diode D1, the capacitor C5 is charged thereby, and then a voltage outputted from the capacitor C5 is fed to the outside as an output voltage Vo.

The output voltage Vo is divided by the voltage dividing resistors R1 and R2, and the resultant feedback voltage Vadj is inputted to the inverting input terminal (-) of the error amplifier 18 via the INV terminal 5. Then, the error amplifier 18 outputs a voltage based on the potential difference between one of the voltages inputted to the first and second non-inverting input terminals (+) thereof that has a lower voltage level and the feedback voltage Vadj inputted to the inverting input terminal (-) thereof.

The first non-inverting input terminal (+) of the error amplifier 18 is fed with a voltage from the soft-start circuit 16 that increases with time after the soft-start circuit 16 starts to operate, that is, after the regulator IC 10 is activated, and the second non-inverting input terminal (+) thereof is fed with a reference voltage Vref from the reference voltage source 17. Note that this reference voltage Vref is set at a voltage Vadj obtained by dividing a predetermined output voltage Vo by the voltage dividing resistors R1 and R2.

An error signal outputted from the error amplifier 18 is inputted to the inverting input terminal (-) of the PWM comparator 19. The non-inverting input terminal (+) of the PWM comparator 19 is fed with a triangular wave signal Vosc having a fixed frequency from the oscillation circuit 20. The PWM comparator 19 compares the voltage at the inverting input terminal (-) thereof with the voltage at the non-inverting input terminal (+) thereof. If the voltage at the non-inverting input terminal (+) is lower than the voltage at the inverting input terminal (-), the PWM comparator 19 outputs a low-level (L-level) PWM signal to the latch circuit 21, and outputs a high-level (H-level) PWM signal to the latch circuit 21 when the voltage at the non-inverting input terminal (+) becomes higher than the voltage at the inverting input terminal (-).

Upon receiving an H-level PWM signal, the latch circuit 21 latches the output, and outputs an H-level output signal to the driver 22. When a reset signal having the same fixed frequency as that of the triangular wave signal Vosc and generated by the reset signal generation circuit 28 based on the triangular wave signal Vosc outputted from the oscillation circuit 20 is inputted to the reset terminal, the latch circuit 21 opens up the latch and outputs L-level. In this way, the PWM signal from the PWM comparator 19 is subjected to waveform shaping, and is then fed to the driver 22. Note that the reset signal generation circuit 28 generates a reset signal by making the comparator 28b compare the triangular wave signal Vosc outputted from the oscillation circuit 20 with a reference voltage from the reference voltage source 28a.

The driver 22 outputs an output signal obtained by buffering the output signal from the latch circuit 21 to the gate of the MOS 26, thereby driving the MOS 26. That is, when the PWM signal via the latch circuit 21 is H-level, the MOS 26 is turned off; when the PWM signal is L-level, the MOS 26 is turned on. Thus, the driver 22 outputs a pulse signal having the same frequency as the oscillating frequency of the oscillation circuit 20, and the duty cycle of the pulse signal is determined based on the error signal from the error amplifier 18. That is, the higher the output voltage Vo is above the predetermined voltage, the longer the duration of H-level, that is, the duration for which the MOS 26 is off; the lower the output voltage Vo is below the predetermined voltage, the longer the duration of L-level, that is, the duration for which the MOS 26 is on.

As described above, since the duty cycle of the PWM signal is adjusted in such a way that the feedback voltage Vadj becomes equal to the reference voltage Vref, the output voltage Vo is stably kept at the predetermined voltage. In addition to this, at startup, until the voltage from the soft-start circuit 16 exceeds the reference voltage Vref, a so-called soft-start operation is performed so that the output voltage Vo gradually increases with increase in the voltage from the soft-start circuit 16. This makes it possible to prevent an excessive inrush current from flowing, at startup, into a load to which the output voltage Vo is fed.

Incidentally, the regulator IC 10 may be overheated due to increase in the current flowing through the MOS 26. If the TSD circuit 26 detects that the temperature of a certain spot of the regulator IC 10 becomes equal to or greater than a predetermined temperature, the TSD circuit 26 feeds an overheat detection signal to the driver 22. The driver 22 fed with the overheat detection signal stops an output, and turns the MOS 26 off. In this way, overheat protection is achieved by preventing the temperature of the regulator IC 10 from exceeding a predetermined temperature.

On the other hand, if a short circuit, for example, occurs in the line through which the output voltage Vo is fed to the load, overcurrent may flow through the MOS 26 or the like and cause damage thereto. When a current flows through the MOS 26, a voltage drop determined by multiplying the on-resistance of the MOS 26 and the current flowing therethrough occurs between the source and drain of the MOS 26. As a result, when the current flowing through the MOS 26 exceeds a predetermined current, the voltage drop between the source and drain of the MOS 26 becomes greater than a predetermined value.

When the drain voltage of the MOS 26 becomes lower than a predetermined voltage obtained by subtracting a voltage of the constant voltage source 25 from the input voltage Vin, the overcurrent detection comparator 24 feeds an H-level set signal to the set terminal of the latch circuit 21. As a result, the output of the latch circuit 21 is set at an H-level, and the driver 22 turns the MOS 26 off. That is, by turning the MOS 26 off when the current through the MOS 26 exceeds the predetermined current and thus the drain voltage of the MOS 26 becomes lower than the predetermined voltage, it is possible to protect the regulator IC 10 from overcurrent. Note that a set signal is reset by a reset signal from the reset signal generation circuit 28, the reset signal being generated at regular intervals.

Furthermore, when the regulator IC 10 is incorporated in an electronic appliance such as a radio or a monitor as its control power supply, switching noise at a specific frequency (including harmonic components) caused by the switching of the MOS 26 may affect the output of the radio, the monitor, or the like fed with the output voltage Vo. For example, noise may appear in the output sound of the radio, or the screen of the monitor may suffer from flickering. In such cases, the influence of the switching noise can be avoided by changing the switching frequency to an uninfluential frequency by changing the resistance value of the resistor R4 to be connected to the RT terminal 6.

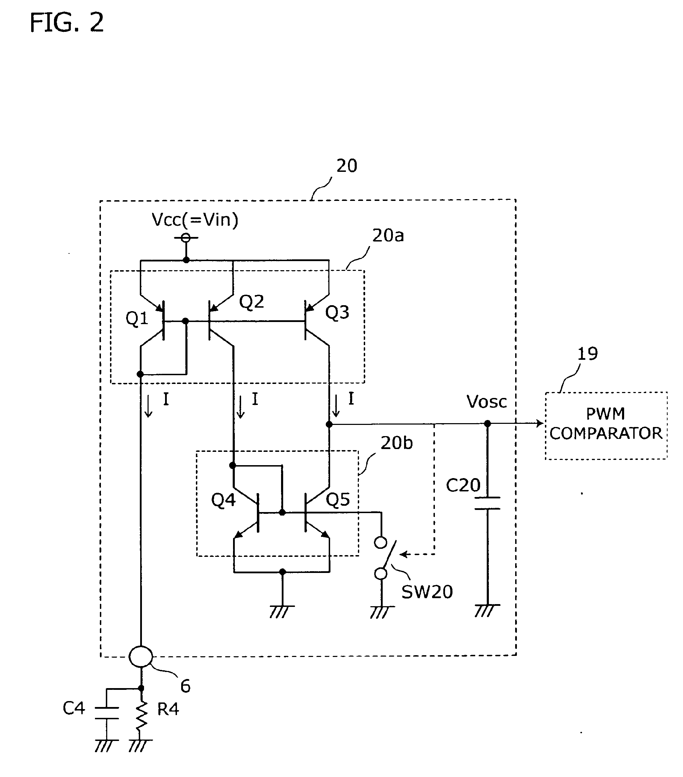

Fig. 2 is a circuit diagram showing the specific circuitry of the oscillation circuit 20. For the sake of convenience, in Fig. 2, such circuit blocks as are found also in Fig. 1 will be identified with common reference characters, and their detailed explanations will not be repeated. The oscillation circuit 20 shown in Fig. 2 is built with PNP transistors Q1, Q2, and Q3 constituting a current mirror circuit 20a, NPN transistors Q4 and Q5 constituting a current mirror circuit 20b at a downstream side of the PNP transistors Q2 and Q3, a capacitor C20, and a charge/discharge switching circuit SW20.

In Fig. 2, reference character Vcc denotes a power supply line through which an input voltage Vin or a predetermined voltage generated from the input voltage Vin is fed. In this example, it is assumed that an input voltage Vin is fed therethrough. The emitters of the PNP transistors Q1, Q2, and Q3 are connected to the power supply line Vcc. The bases of the PNP transistors Q1, Q2, and Q3 and the collector of the PNP transistor Q1 are connected to the RT terminal 6. Between the RT terminal 6 and the ground, the resistor R4 and the capacitor C4 are externally connected in parallel. Note that this external capacitor C4 is provided for noise removal.

The collector of the PNP transistor Q2 is connected to the ground via the collector and the emitter of the NPN transistor Q4, and the collector of the PNP transistor Q3 is connected to the ground via the collector and the emitter of the NPN transistor Q5. The bases of the NPN transistors Q4 and Q5 and the collector of the NPN transistor Q4 are connected together, and the collector of the NPN transistor Q5 is connected to the ground via the capacitor C20. A voltage of the capacitor C20 is fed to the non-inverting input terminal (+) of the PWM comparator 19 as a triangular wave signal Vosc (see Fig. 1).

The charge/discharge switching circuit SW20 is connected between a node at which the bases of the NPN transistors Q4 and Q5 are connected together and the ground, and is so controlled as to be turned on/off in accordance with a voltage of the triangular wave signal Vosc. Thus, in accordance with off/on of the charge/discharge switching circuit SW20, the NPN transistors Q4 and Q5, that is, the current mirror circuit 20b is turned on/off.

Next, an operation of the oscillation circuit 20 configured as described above will be described. When an input voltage Vin is fed to the power supply line Vcc, a current I determined by the input voltage Vin divided by the resistor R4 flows from the power supply line Vcc to the ground via the emitter and the collector of the PNP transistor Q1, the RT terminal 6, and the resistor R4. This current I is mirrored to the PNP transistors Q2 and Q3 constituting the current mirror circuit 20a, and is then outputted to the NPN transistors Q4 and Q5 located downstream thereof.

The charge/discharge switching circuit SW20 is so controlled as to be turned off when the triangular wave signal Vosc reaches an upper side threshold voltage Vh, and to be turned on when the triangular wave signal Vosc reaches a lower side threshold voltage Vl (Vh > Vl). When the triangular wave signal Vosc reaches the lower side threshold voltage Vl, that is, when the charge/discharge switching circuit SW20 is turned on, the NPN transistor Q5 is turned off, and hence the capacitor C20 is charged with the current I outputted from the PNP transistor Q3. As the capacitor C20 is charged, the triangular wave signal Vosc increases at a constant rate.; When the triangular wave signal Vosc reaches the upper side threshold voltage Vh, the charge/discharge switching circuit SW20 is turned off and the NPN transistor Q5 is turned on, and the capacitor C20 starts to discharge via the NPN transistor Q5.

The NPN transistor Q5 is so configured as to have an area twice the emitter area of the NPN transistor Q4, and thus, when a current I flows through the NPN transistor Q4, it allows a current twice the current of the NPN transistor Q4 (= 21) to flow therethrough. Thus, the current flowing when the NPN transistor Q5 is turned on is 21, and the discharging current discharged by the capacitor C20 via the NPN transistor Q5 is 21 - I (the current I outputted from the PNP transistor Q3) = I. As a result, the triangular wave signal Vosc decreases at the same constant rate as that observed at the charging.

When the triangular wave signal Vosc reaches the lower side threshold voltage Vl, the charge/discharge switching circuit SW20 is turned on and the NPN transistor Q5 is turned off, and the capacitor C20 starts to be charged again with the current I. A triangular wave at a specific frequency generated by repeating the operation described above is outputted as a triangular wave signal Vosc. As described above, when the NPN transistor Q5 is so configured as to have an area twice the emitter area of the NPN transistor Q4, the current values of the charging current and the discharging current of the capacitor C20 become equal to each other, and thus the triangular wave signal Vosc increases and decreases at the same rate. However, the triangular wave signal Vosc does not necessarily have to increase and decrease at the same rate. The emitter area of the NPN transistor Q5 may be a predetermined multiple of the emitter area of the NPN transistor Q4.

Incidentally, changing the resistance value of the resistor R4 results in change of the magnitude of the aforementioned current I and hence the magnitude of the charging/discharging current of the capacitor C20. That is, the smaller the resistance value of the resistor R4, the greater the current I and hence the greater the charging/discharging current of the capacitor C20. As a result, at the time of charging, the triangular wave signal Vosc reaches the upper side threshold voltage Vh at an earlier point, and, at the time of discharging, it reaches the lower side threshold voltage V1 at an earlier point. This makes shorter the period of the triangular wave signal Vosc. On the other hand, when the resistance value of the resistor R4 is made greater, an operation opposite to the above operation is carried out, whereby the period of the triangular wave signal Vosc is made longer.

As described above, by changing the resistance value of the resistor R4, it is possible to change the oscillating frequency of the oscillation circuit 20. This helps avoid the influence of switching noise when the regulator IC 10 shown in Fig. 1 is incorporated in an electronic appliance such as a radio or a monitor and is made to operate. That is, even when the switching noise affects the output of the electronic appliance, only by changing the resistance value of the resistor R4, it is possible to change the switching frequency to a frequency that does not affect the output of the electronic appliance. Alternatively, the resistor R4 may be a variable resistor, whereby it becomes possible to change the switching frequency to a frequency that does not affect the output of the electronic appliance with the electronic appliance operating continuously.

In this case, however, the following problem arises. Setting a switching frequency at a higher frequency requires the control elements and the like in the internal control circuit 15 to have a good frequency characteristic. However, if an error amplifier 18 having a good frequency characteristic is used, the circuitry may suffer from oscillation. To deal with this problem, a phase lag compensation circuit 27 built as a circuit in which a capacitor C3 and a resistor R3 are connected in series is externally connected between the FB terminal 3 and the INV terminal 5, whereby it is possible to prevent the oscillation of the circuitry even when a switching frequency is set at a higher frequency by using an error amplifier 18 having a good frequency characteristic.

For example, when the phase lag compensation circuit 27 is not externally connected, the upper limit of the switching frequency is of the order of 300 kHz; when the phase lag compensation circuit 27 is externally connected, the upper limit is increased up to the order of 500 kHz. As a result, even when a switching frequency is set at a higher frequency, it is possible to make the regulator IC 10 operate stably by increasing the conversion efficiency thereof. This makes it possible to make smaller and lighter the regulator IC 10 and hence a power supply apparatus adopting the regulator IC 10.

As described above, since the regulator IC 10 completely stops the internal control circuit 15 by means of the switch circuit 14 when it enters the standby state in response to turning-off of the external switch 12, it is possible to reduce the electric power consumption on standby to zero. This contributes to power saving.

On the other hand, the regulator IC 10 is provided with the RT terminal 6 to which the resistor R4 that determines the oscillating frequency of the oscillation circuit 20, that is, the switching frequency of the MOS 26, is connected. As a result, when the switching frequency is changed in order to, for example, avoid the influence of the switching noise, it is possible to change the switching frequency only by changing the resistance value of the resistor R4 without changing the regulator IC 10 itself. Alternatively, the resistor R4 may be a variable resistor, whereby it becomes possible to change the switching frequency with the regulator IC 10 operating continuously.

Additionally, the regulator IC 10 is provided with the FB terminal 3 to which the externally-connected phase lag compensation circuit 27 built as a circuit in which the capacitor C3 and the resistor R3 are connected in series, and through which the output of the error amplifier 18 is fed back to the inverting input terminal (-) thereof via the phase lag compensation circuit 27. As a result, even when a switching frequency is set at a higher frequency by using an error amplifier 18 having a good frequency characteristic, it is possible to prevent the oscillation of the circuitry despite the high switching frequency. This makes it possible to make smaller and lighter the regulator IC 10 and hence a power supply apparatus adopting the regulator IC 10.

Furthermore, the regulator IC 10 is protected from overheating by the TSD circuit 23 provided therein, and is protected from overcurrent by the overcurrent comparator 24 provided therein. In addition to this, thanks to the soft-start circuit 16 provided therein, the regulator IC 10 can perform a soft-start operation by which an output voltage Vo gradually increases at startup to a predetermined voltage.

Obviously, many modifications and variations of the present invention are possible in light of the above teachings. It is therefore to be understood that within the scope of the appended claims, the invention may be practiced other than as specifically described. For example, the MOS 26 may be a bipolar transistor, and the current mirror circuits 20a and 20b of the oscillation circuit 20 may be built with MOS transistors.

### Industrial Applicability

The present invention can be used as power supply apparatuses of various electronic appliances, in particular, the electronic appliances that require power saving on standby.

## Claims

1. A switching regulator type power supply apparatus that operates in such a way that an input voltage is converted and then fed to a smoothing circuit, and an output from the smoothing circuit becomes equal to a predetermined output voltage, the switching regulator type power supply apparatus comprising:
a control circuit for generating a control signal by a PWM scheme so that the output becomes equal to the predetermined output voltage; and
a switching element that is switched by the control signal so as to convert the input voltage and feed the voltage thus converted to the smoothing circuit,
wherein, based on an external signal for turning on/off an output of the output voltage, a supply path for supplying an operating power to elements constituting the control circuit is switched between a conducting state and a non-conducting state.

2. The power supply apparatus of claim 1,
wherein the control circuit includes
an error amplifier for generating an error signal by comparing a feedback voltage commensurate with the output voltage with a reference voltage,
an oscillation circuit for generating an oscillating signal at a predetermined frequency,
a PWM comparator for generating a PWM signal by comparing the oscillating signal with the error signal,
a drive circuit for driving the switching element by feeding the control signal thereto based on the PWM signal, and
a switching circuit for switching the supply path that supplies an operating power to the elements constituting the control circuit between a conducting state and a non-conducting state,
wherein the power supply apparatus further comprises
an input terminal to which the input voltage is fed,
a switching terminal for outputting a voltage to be fed to the smoothing circuit, the switching terminal being connected to one end of the switching element,
a feedback voltage terminal to which the feedback voltage is fed,
an external element connection terminal to which an external element that determines the predetermined frequency of the oscillating signal is connected,
a feedback terminal to which an output of the error amplifier is connected, and to which, for preventing self-erroneous oscillation of the control circuit, one end of a phase lag compensation circuit that is connected at another end thereof to the feedback voltage terminal is connected, and
a standby terminal to which the external signal is fed.

3. The power supply apparatus of claim 2,
wherein the oscillation circuit includes a charge/discharge capacitor whose charge/discharge cycle is determined by a value of a current flowing through the external element, and
wherein the predetermined frequency of the oscillating signal can be changed by changing the value of the current flowing through the external element by changing a resistance value of the external element.

4. The power supply apparatus of claim 2,
wherein the oscillation circuit includes
a capacitor for performing charge/discharge,
a first current mirror circuit for determining a value of a charging current of the capacitor based on a resistance value of the external element,
a second current mirror circuit for determining a value of a discharging current of the capacitor, and
a charge/discharge switching circuit for switching charge/discharge of the capacitor by turning on/off the second current mirror circuit by comparing a voltage across the capacitor with first and second threshold value voltages.

5. The power supply apparatus of claim 4,
wherein the first current mirror circuit includes
a first input side circuit having a current path to which the external element is connected,
a first output side circuit through which a first output side current proportional to an input side current flowing through the first input side circuit flows, and
a second output side circuit through which a second output side current proportional to the input side current flowing through the first input side circuit flows,
wherein the second current mirror circuit includes
a second input side circuit that is connected to a current path of the first output side current, and
a third output side circuit that is connected to a node at which a current path of the second output side current and one end of the capacitor are connected together, and
wherein the charge/discharge switching circuit causes the capacitor to be charged with the second output side current by bringing the third output side circuit into a non-conducting state, and causes the capacitor to be discharged by bringing the third output side circuit into a conducting state.

6. The power supply apparatus of claim 2,
wherein the control circuit further includes an overcurrent protection circuit for stopping the drive circuit when a current flowing through the switching element exceeds a predetermined current value.

7. The power supply apparatus of claim 6,
wherein the overcurrent protection circuit detects a voltage drop across the switching element, and, when the voltage drop exceeds a predetermined voltage, stops the drive circuit.

8. The power supply apparatus of claim 6,
wherein the overcurrent protection circuit includes an overcurrent detection comparator for comparing a voltage outputted from the switching element with a predetermined voltage, and
wherein, when the voltage outputted from the switching element becomes lower than the predetermined voltage, the overcurrent detection comparator stops the drive circuit.

9. The power supply apparatus of claim 2,
wherein the control circuit further includes an overheat protection circuit for stopping the drive circuit when a temperature of a certain spot of the power supply apparatus exceeds a predetermined temperature.

10. The power supply apparatus of claim 2,
wherein the control circuit further includes a soft-start circuit for controlling the error amplifier so that the output voltage gradually increases at startup.

11. The power supply apparatus of one of claims 1 to 10,
wherein the power supply apparatus is built as an integrated circuit device.
